# EUROPÄISCHE PATENTANMELDUNG

(11) **EP 1 661 787 A2**
(43) Veröffentlichungstag der Anmeldung: **31.05.2006**
(21) Anmeldenummer: 05025918.3
(22) Anmeldetag: 28.11.2005
(51) Int. Cl.: B62B 17/02, B62B 13/10

(54) **Schlitten mit mindestens drei Kufen**

(30) Priorität: 30.11.2004 DE 102004057578
(71) Anmelder: Thomalla, Reinhold, 4730 Raeren (BE)
(72) Erfinder: Thomalla, Reinhold, 4730 Raeren (BE)
(74) Vertreter: Kohlmann, Kai

(57) **Zusammenfassung**

Die Erfindung betrifft einen Schlitten mit mindestens drei Kufen, einem auf den Kufen abgestützten Rahmen und einer Sitzfläche, wobei die Kufen sternförmig um einen Drehpunkt herum angeordnet sind, jede Kufe mindestens eine gegenüber einer Auflagefläche für den Schlitten geneigte Gleitfläche aufweist und die geneigten Gleitflächen der Kufen in Drehrichtung um den Drehpunkt dieselbe Orientierung aufweisen.

Um einen Schlitten der gattungsgemäßen Art zu schaffen, der nicht nur ein neuartiges Rodelerlebnis verschafft, sondern die Geschwindigkeitsaufnahme des Schlittens in weniger steilem Gelände erleichtert, wird vorgeschlagen, dass mindestens zwei von vorzugsweise insgesamt drei Kufen des Schlittens um eine zur Auflagefläche des Schlittens senkrechte Achse drehbar angeordnet sind. In ihrer Ausgangslage sind sämtliche Kufen sternförmig um den Drehpunkt herum angeordnet. Durch Verdrehen der zwei Kufen aus ihrer Ausgangslage können sämtliche Kufen zeitweilig parallel und damit längs zur Fahrtrichtung ausgerichtet werden.

## Beschreibung

Die Erfindung betrifft einen Schlitten mit mindestens drei Kufen, einem auf den Kufen abgestützten Rahmen und einer Sitzfläche, wobei die Kufen sternförmig um einen Drehpunkt herum angeordnet sind, jede Kufe mindestens eine gegenüber einer Auflagefläche für den Schlitten geneigte Gleitfläche aufweist und die geneigten Gleitflächen der Kufen in Drehrichtung um den Drehpunkt dieselbe Orientierung aufweisen.

Neben Schlitten mit starren Kufen sind lenkbare Schlitten bekannt, die wenigstens eine Lenkkufe besitzen, die über eine Steuersäule mit einem Lenkrad in Verbindung steht.

Außer diesen herkömmlichen Schlitten sind Sonderbauformen bekannt, die sich durch eine besondere Anordnung der Kufen auszeichnen.

Aus der US 6,604,748 ist beispielsweise ein Schlitten mit einem Rahmen, einem im hinteren Teil angeordneten Rahmenstützteil sowie einer Dreheinheit bekannt. Die Dreheinheit ist über eine Verbindungseinheit drehbeweglich mit dem Rahmen verbunden. Aufgrund der besonderen Ausgestaltung der Dreheinheit ist es mit diesem Schlitten möglich, durch ein Hin- und Herbewegen der Dreheinheit mittels eines Steuerelementes den Schlitten in Bewegung zu setzen, selbst wenn keine äußere Kraft, wie beispielsweise die Hangabtriebskraft, auf ihn einwirkt.

Die DE 202 05 769 U1 offenbart die Verwendung von KfZ-Schläuchen als Schlitten. Hervorgehoben wird die federnde Eigenschaft und die damit verbundene Fahrcharakteristik der Gummischläuche. Um einen derartigen Schlauch lenkbar zu machen wird eine Lenkeinheit vorgeschlagen, die einen Tragkörper aufweist, auf dem eine Sitzfläche ausgebildet ist und der ein ein- oder mehrspuriges Kufenelement auf der Unterseite aufweist. Der Tragkörper ist um seine Längsachse relativ zu dem Schlauch schwenkbar. Durch Gewichtsverlagerung nach links oder rechts kann ein Fahrtrichtungswechsel des Schlauchs ausgelöst werden.

Schließlich ist aus der US 2 972 767 A ein Schlitten mit drei sternförmig zueinander angeordneten Kufen bekannt, die den Schlitten automatisch in Drehbewegung versetzen. Der Schlitten weist drei sternförmig um einen Drehpunkt herum angeordnete Kufen auf, die an einem tellerförmigen Rahmen angebracht sind, der zugleich als Sitzfläche dient. Die einzelnen Kufen weisen in übereinstimmender Richtung geneigte Gleitflächen auf.

Ausgehend von diesem Stand der Technik liegt der Erfindung die Aufgabe zugrunde, einen Schlitten der gattungsgemäßen Art zu schaffen, der nicht nur ein neuartiges Rodelerlebnis verschafft, sondern die Geschwindigkeitsaufnahme des Schlittens in weniger steilem Gelände erleichtert.

Diese Aufgabe wird durch die Merkmale des Anspruch 1 gelöst. Die Geschwindigkeitsaufnahme des Schlittens in weniger steilem Gelände wird dadurch erleichtert, dass mindestens zwei von vorzugsweise insgesamt drei Kufen des Schlittens um eine zur Auflagefläche des Schlittens senkrechte Achse drehbar angeordnet sind. In ihrer Ausgangslage sind sämtliche Kufen sternförmig um den Drehpunkt herum angeordnet. Durch Verdrehen der zwei Kufen aus ihrer Ausgangslage können sämtliche Kufen zeitweilig parallel und damit längs zur Fahrtrichtung ausgerichtet werden. Sobald eine gewünschte Geschwindigkeit erreicht ist, werden die drehbar angeordneten Kufen wieder in ihre Ausgangslage sternförmig um den Drehpunkt herum zurückgeschwenkt. Das Verdrehen von zwei Kufen ist auch bei einer Ausführungsform des Schlittens mit insgesamt vier Kufen ausreichend, sofern zwei der vier Kufen miteinander fluchten. Die beiden weiteren Kufen werden zum Anfahren mit den beiden fluchtenden Kufen parallel ausgerichtet. In jedem Fall ist die Anzahl der drehbar angeordneten Kufen so zu bestimmen, dass sämtlich Kufen zeitweilig parallel zueinander ausgerichtet werden können.

In einer Ausgestaltung der Erfindung sind sämtliche Kufen des Schlittens um eine zur Auflagefläche des Schlittens senkrechte Achse drehbar angeordnet. Hierdurch ist gewährleistet, dass sämtliche Kufen zeitweilig parallel und damit längs zur Fahrtrichtung ausgerichtet werden können, um das Anfahren zu erleichtern. Darüber hinaus lässt sich bei einer derartigen Ausführungsform durch verdrehen sämtlicher Kufen um 180 °aus der Ausgangslage die Drehrichtung des Schlitten ändern. Sämtliche in gleicher Richtung weisende Gleitflächen weisen dann dieselbe, jedoch entgegengesetzte Orientierung auf.

Durch die übereinstimmend orientierten, sternförmig um einen Drehpunkt herum angeordneten geneigten Gleitflächen wird die Drehbewegung bei hinreichend steilem Gelände ohne Anschieben des Schlittens ausgelöst. Die der schneebedeckten Auflagefläche zugewandte Seite der Gleitfläche gleitet von ihrer in Betriebsstellung höher gelegenen Kante zur tiefer gelegenen Kante solange über den Schnee bis aufgrund der Drehbewegung deren tiefer gelegene Kante in Fahrtrichtung nach vorne weist. In diesem Augenblick wird die tiefer gelegene Kante von dem in Fahrtrichtung anstehenden Schnee erfasst und sorgt somit für die Einleitung eines Drehimpulses in den Schlitten.

Im Interesse einer gleichmäßigen Drehbewegung des Schlittens stimmt die Neigung sämtlicher Kufen überein. Des weiteren sind die Kufen gleichmäßig sternförmig um den Drehpunkt herum angeordnet, so dass die freien Sektoren zwischen den Kufen gleich groß sind.

In einer vorteilhaften Ausgestaltung der Erfindung werden die Kufen von im Querschnitt dreieckigen Profilen gebildet. Der Querschnitt ist insbesondere ein rechtwinkliges Dreieck, wobei dessen dem rechten Winkel gegenüberliegende Seite in der Gleitfläche liegt und deren Breite entspricht.

In einer einfachen Ausgestaltung der Erfindung wird der Rahmen von einer Scheibe, beispielsweise einer kreiszylindrischen Scheibe, gebildet, an deren Unterseite die weiter oben beschriebenen, im Querschnitt dreieckigen Profile sternförmig zueinander angeordnet sind. Die glattflächige Oberfläche der Scheibe dient zugleich als Sitzfläche.

Ebenfalls um unterschiedliche Drehrichtungen des Schlittens zu ermöglichen, ist es in einer Ausgestaltung der Erfindung vorgesehen, dass auf jeder Seite der Scheibe Kufen angeordnet sind. Durch Wenden der Scheibe kann dann die Drehrichtung geändert werden, vorausgesetzt die Orientierung der jeweils im Einsatz befindlichen Gleitflächen ist unterschiedlich. Bei dieser Variante des erfindungsgemäßen Schlittens ist der Sitzkomfort allerdings eingeschränkt, da auf den jeweils inaktiven Kufen Platz genommen werden muss.

Um den Sitzkomfort bei einer derartigen Ausführung der Erfindung zu verbessern wird erfindungsgemäß vorgeschlagen, dass die Scheibe beidseitig mit einer Abdeckung verbindbar ist, die entweder die Kufen auf der einen oder anderen Seite der Scheibe abdeckt. Die insbesondere glattflächige Oberfläche der Abdeckung dient dann als Sitzgelegenheit. Zur weiteren Verbesserung des Komforts kann in die Oberfläche der Abdeckung eine Sitzmulde eingelassen sein. Schließlich ist es möglich, an der Scheibe oder Abdeckung Haltegriffe anzuordnen.

Nachfolgend wird die Erfindung anhand mehrerer Ausführungsbeispiele näher erläutert.

### Es zeigen

- Figur 1:: Eine Prinzipsskizze eines Schlittens;
- Figur 2:: eine Seitenansicht eines Schlittens entsprechend Figur 1 zur Erläuterung der Drehwirkung;
- Figur 3:: eine Seitenansicht eines Schlittens mit Kufen auf beiden Seiten;
- Figur 4:: einen Schlitten nach Figur 3 mit einer Abdeckung;
- Figur 5:: eine Unteransicht eines erfindungsgemäßen Schlittens mit zwei drehbar angeordneten Kufen;
- Figur 6a:: eine Aufsicht auf einen erfindungsgemäßen Schlitten mit drei drehbar angeordneten Kufen; sowie
- Figur 6b:: eine Prinzipdarstellung des Getriebes zum Verstellen der drehbar angeordneten Kufen nach Figur 6a;
- Figur 7:: eine Unteransicht und eine Seitenansicht einer drehbaren Kufe nach Figur 5;

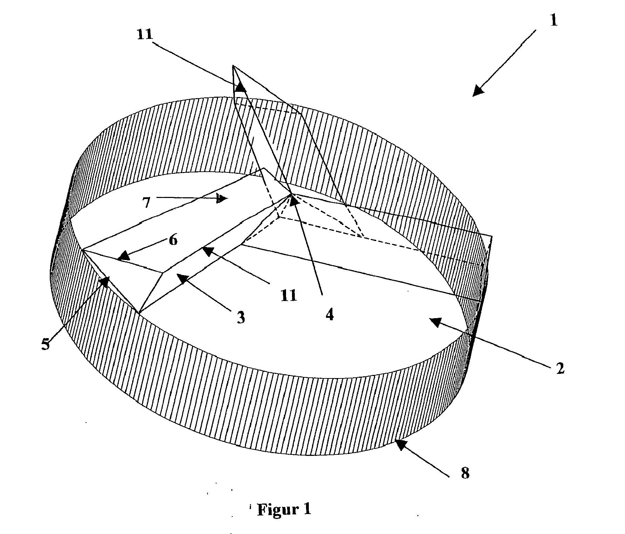

Figur 1 zeigt eine einfache Ausführungsform des Schlittens, jedoch ohne Drehmechanismus der Kufen. Der Schlitten besteht im wesentlichen aus einer kreiszylindrischen Scheibe 1 auf deren Unterseite 2 drei Kufen 3 sternförmig um einen Drehpunkt 4 herum angeordnet sind. Die Kufen 3 werden von im Querschnitt 5 dreieckigen Profilen gebildet. Wie aus der Figur ersichtlich, handelt es sich um ein rechtwinkliges Dreieck, dessen dem rechten Winkel gegenüberliegende Seite 6 in der Gleitfläche 7 liegt und deren Breite entspricht. Aus Figur 1 ist weiter erkennbar, dass die Neigung sämtlicher Gleitflächen 7 die gleiche Orientierung aufweist. Folglich weist der zwischen jeder Gleitfläche 7 und der nicht dargestellten ebenen Auflagefläche der Gleitfläche eingeschlossene Winkel an sämtlichen Kufen 3 die selbe Größe auf. Die den Kufen 3 gegenüberliegende Oberseite 8 der Scheibe 1 dient als Sitzfläche.

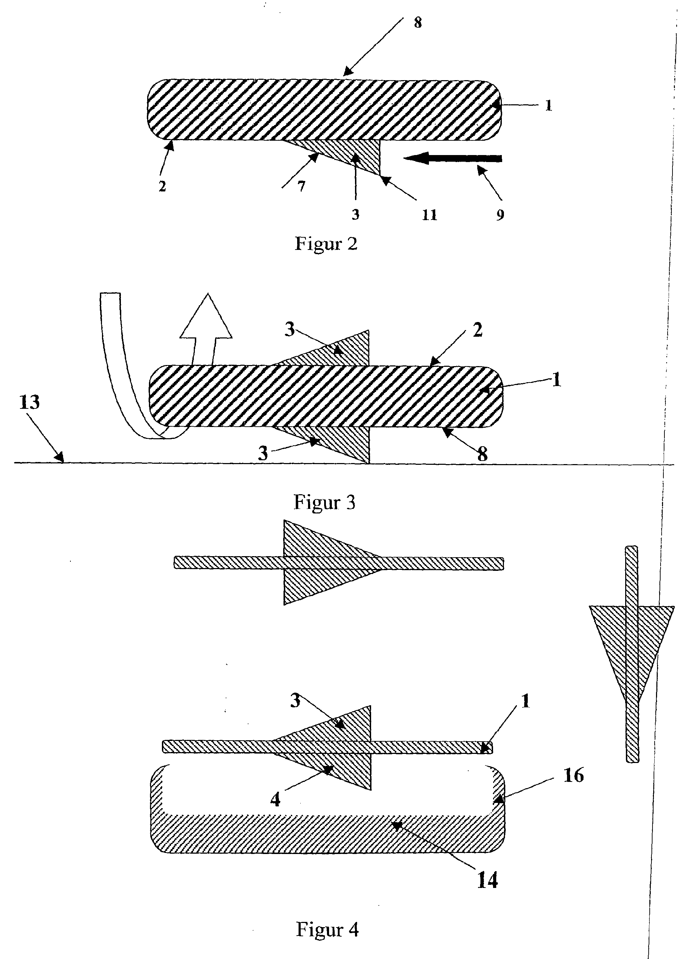

Sofern der Schlitten für eine Person ausgelegt ist, ist der Durchmesser der Scheibe 1 beispielsweise 80 cm und weist eine Höhe von beispielsweise 15 cm auf. Um Verletzungen zu vermeiden, sind die Kanten der Scheibe vorzugsweise abgerundet, wie dies insbesondere in Figur 2 erkennbar ist. Selbstverständlich kommen je nach Einsatzzweck des Schlittens andere Abmessungen und Ausführungsformen des Rahmens in Betracht.

Die Entstehung der Drehbewegung um den Drehpunkt 4 der Scheibe 1 wird nachfolgend anhand von Figur 2 erläutert, in der ebenfalls der Drehmechanismus der Kufen nicht dargestellt ist. Es handelt sich um einen im Uhrzeigersinn drehenden erfindungsgemäßen Schlitten. Sämtliche Kufen 3 gleiten mit der Gleitfläche 7 über den Schnee in Richtung des Pfeils 9. Die Drehung der in Figur 2 dargestellten Kufe 3 wird durch die beiden anderen, in der Figur nicht dargestellten Kufen erzwungen, deren unteren Kanten 11 entgegen der Fahrtrichtung orientiert sind. Die entgegen der Fahrtrichtung orientierten Kanten 11 werden von dem anstehenden Schnee erfasst und versetzen die Scheibe in Drehung. Auf diese Weise nehmen die Kufen 3 nacheinander die Position der in Figur 2 dargestellten Kufe 3 ein. Im Ergebnis gleitet die jeweilige Gleitfläche 7 jeder Kufe solange über den Schnee, bis sie mit ihrer unteren Kante 11 sowie der Schmalseite 12 dem in Bewegungsrichtung anstehenden Schnee Widerstand entgegensetzen und dadurch die Drehung bewirken. Ein Festsetzen von Schnee oder Eis an den Kufen 3 wird weitgehend ausgeschlossen, da die Rotation der Kufen eine Selbstreinigung bewirkt.

Figur 3 zeigt einen Schlitten, der auf der Unter- und Oberseite 2,8 der Scheibe 1 jeweils drei Kufen trägt, von denen in Figur 3 jeweils nur eine dargestellt ist. Der Drehmechanismus der Kufen ist ebenfalls nicht dargestellt. Durch Wenden der Scheibe 1 kann die Drehrichtung des Schlittens geändert werden. Der auf der Auflagefläche 13 aufliegende Schlitten nach Figur 3 dreht aufgrund der Orientierung der auf der Unterseite 8 angeordneten Kufen 3 im Uhrzeigersinn. Wird die Scheibe 1 umgedreht, kommen die auf der gegenüberliegenden Seite 2 angeordneten Kufen 3 zum Einsatz und die Scheibe 1 dreht sich entgegen dem Uhrzeigersinn.

Durch das Wenden vertauschen die Ober- und Unterseite 2, 8 der Scheibe 1 ihre Position. Der Sitzkomfort ist bei dieser Ausführungsform jedoch eingeschränkt, da auf den jeweils nach oben weisenden Kufen 3 Platz genommen werden muss. Um hier Abhilfe zu schaffen, ist es beispielsweise denkbar, auf der Unterseite 8 der Scheibe 1 zwei Paare von jeweils drei Kufen anzuordnen, die wechselweise zum Einsatz gelangen. Die Orientierung der Neigung der beiden Kufenpaare ist entgegengesetzt. Eine einfachere und preiswertere Möglichkeit, den Sitzkomfort bei einen Schlitten mit zwei unterschiedlichen Drehrichtungen zu erhöhen, besteht darin, dass die in Figur 3 dargestellte Scheibe 1 beidseitig mit einer Abdeckung 14 verbindbar ist. Die Abdeckung 14 weist eine ebene Oberfläche auf, die als Sitzfläche dient. Die Ränder der Oberfläche werden von einem umlaufenden Rand 16 begrenzt, in den die die Kufen 3 aufweisende Scheibe 1 einsetzbar ist. Durch Wenden der Scheibe 1 lässt sich die Drehrichtung des Schlittens verändern.

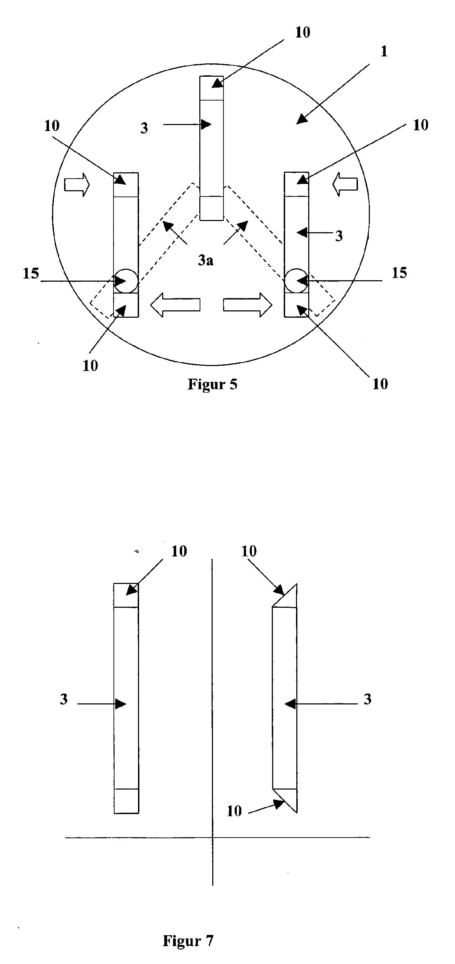

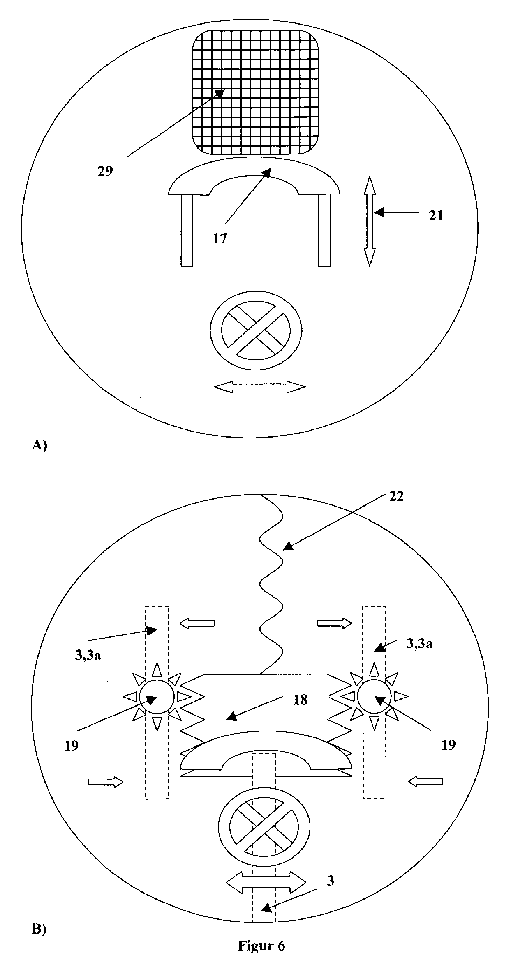

Figur 5 zeigt eine schematische Unteransicht des erfindungsgemäßen Schlittens mit drei Kufen 3 und schematischer Darstellung des Verdrehmechanismus für die Kufen. Zwei der drei Kufen sind um eine senkrechte Achse 15 drehbar angeordnet. Die Kufen sind, wie aus Figur 7 ersichtlich endseitig angeschrägt, um das Anfahren des Schlittens zu erleichtern. In Fahrtrichtung der in Figur 5 dargestellten Anfahrposition des Schlittens sind sämtliche Kufen 3 parallel zueinander ausgerichtet. Nach Aufnahme der gewünschten Geschwindigkeit, werden die Kufen 3 um die Achsen 15 in Richtung der Pfeile, in die mit 3a gekennzeichnete Position der Kufen 3 geschwenkt. Nach dem Zurückschwenken der Kufen in die Position 3a befinden sich sämtliche Kufen sternförmig um den Drehpunkt 4 herum, so dass der Schlitten die gewünschte Drehbewegung aufnimmt, die anhand der Figuren 1 - 3 erläutert wurde. Die Bedienung der drehbar angeordneten Kufen erfolgt von der Oberseite 8 der Scheibe 1. Ein Ausführungsbeispiel einer Bedieneinheit für die drehbaren Kufen 3, 3a, ist in den Figuren 6a, 6b dargestellt, allerdings im Zusammenhang mit einem erfindungsgemäßen Schlitten, bei dem sämtliche Kufen um eine senkrechte Achse drehbar angeordnet sind.

In Verlängerung der Sitzfläche 29 befindet sich ein in zwei Kulissen geführtes Schiebeelement 17, das auf der Unterseite 2 mit einem Getriebeelement 18 verbunden ist. Das Getriebeelement 18 kämmt mit zwei Ritzeln 19, die jeweils drehfest mit einer Kufe 3 verbunden sind. In dem der Schieber 17 in den Kulissen in Richtung des Pfeils 21 hin und her bewegt wird, werden die mit den Ritzeln 19 verbundenen Kufen 3 in Richtung der in Figur 6b dargestellten Pfeile verdreht.

Über eine Feder 22 wird das Getriebeelement 18 in eine in den Figuren nicht dargestellte Ausgangslage zurückgeholt, in der sämtliche Kufen 3 sternförmig zueinander angeordnet sind. Entgegen der Kraft der Rückholfeder 22 werden die Kufen 3 in die in Figur 6b dargestellte Anfahrposition verschwenkt, in der sämtliche Kufen parallel zueinander ausgerichtet sind.

Als Besonderheit weist der Schlitten nach Figur 6 eine Lenkung der dritten Kufe 3 auf, die allerdings lediglich dann wirksam wird, wenn die beiden um die Achsen 15 verschwenkbaren Kufen 3 parallel zueinander ausgerichtet sind.

**Bezugszeichenliste**

| Nr. | Bezeichnung | Nr. | Bezeichnung |
|---|---|---|---|
| 1. | Scheibe | 29. | Sitzfläche |
| 2. | Unterseite | 30. | |
| 3. | Kufen | 31. | |
| 4. | Drehpunkt | 32. | |
| 5. | Querschnitt | 33. | |
| 6. | Seite | 34. | |
| 7. | Gleitfläche | 35. | |
| 8. | Oberseite | 36. | |
| 9. | Pfeil | 37. | |
| 10. | --- | 38. | |
| 11. | untere Kanten | 39. | |
| 12. | Schmalseite | 40. | |
| 13. | Auflagefläche | 41. | |
| 14. | Abdeckung | 42. | |
| 15. | Achse | 43. | |
| 16. | Umlaufender Rand | 44. | |
| 17. | Schiebeelement | 45. | |
| 18. | Getriebeelement | 46. | |
| 19. | Ritzel | 47. | |
| 20. | --- | 48. | |
| 21. | Pfeil | 49. | |
| 22. | Rückholfeder | 50. | |

## Patentansprüche

1. Schlitten mit mindestens drei Kufen, einem auf den Kufen abgestützten Rahmen und einer Sitzfläche, wobei
- die Kufen (3) sternförmig um einen Drehpunkt (4) herum angeordnet sind
- jede Kufe (3) mindestens eine gegenüber einer Auflagefläche (13) für den Schlitten geneigte Gleitfläche (7) aufweist und
- die geneigten Gleitflächen (7) der Kufen (3) in Drehrichtung um den Drehpunkt (4) dieselbe Orientierung aufweisen, **dadurch gekennzeichnet,**
**dass** mindestens zwei Kufen (3, 3a) des Schlittens um eine zur Auflagefläche (13) des Schlittens senkrechte Achse (15) drehbar angeordnet sind.

2. Schlitten nach Anspruch 1, **dadurch gekennzeichnet, dass** sämtliche Kufen (3, 3a) des Schlittens um eine zur Auflagefläche (13) des Schlittens senkrechte Achse (15) drehbar angeordnet sind.

3. Schlitten nach Anspruch 1 oder 2, **dadurch gekennzeichnet, dass** die Neigung sämtlicher Gleitflächen (7) übereinstimmt.

4. Schlitten nach einem der Ansprüche 1 - 3, **dadurch gekennzeichnet, dass** die freien Sektoren zwischen den Kufen (3) gleich groß sind.

5. Schlitten nach einem der Ansprüche 1 bis 4, **dadurch gekennzeichnet, dass** die Kufen (3) von im Querschnitt (5) dreieckigen Profilen gebildet werden.

6. Schlitten nach Anspruch 5, **dadurch gekennzeichnet, dass** der Querschnitt (5) ein rechtwinkliges Dreieck ist, wobei dessen dem rechten Winkel gegenüberliegende Seite (6) der Breite der Gleitfläche (7) entspricht

7. Schlitten nach einem der Ansprüche 1 bis 6, **dadurch gekennzeichnet, dass** der Rahmen eine Scheibe (1) ist.

8. Schlitten nach Anspruch 7, **dadurch gekennzeichnet, dass** auf einer Seite der Scheibe (1) die Kufen (3) und auf der gegenüberliegenden Seite die Sitzfläche angeordnet ist.

9. Schlitten nach Anspruch 8, **dadurch gekennzeichnet**, **das** auf jeder Seite (2, 8) der Scheibe (1) Kufen (3) angeordnet sind.

10. Schlitten nach Anspruch 9, **dadurch gekennzeichnet, dass** die Scheibe (1) beidseitig mit einer Abdeckung (14) verbindbar ist, die entweder die Kufen (3) auf der einen oder anderen Seite (2,8) der Scheibe (1) abdeckt.
